# EUROPEAN PATENT SPECIFICATION

(11) **EP 3 575 423 B1**
(45) Date of publication and mention of the grant of the patent: **17.02.2021**
(21) Application number: 19176396.0
(22) Date of filing: 24.05.2019
(51) Int. Cl.: C22C 14/00, F01D 5/00, F01D 5/12, B22D 21/00

(54) **PREFORM AND METHOD FOR PRODUCING TIAL-BASED TURBINE WHEEL**
VORFORM UND VERFAHREN ZUR HERSTELLUNG VON TURBINENRAD AUF TIAL-BASIS
PRÉFORME ET PROCÉDÉ DE PRODUCTION D'UNE ROUE DE TURBINE À BASE DE TIAL

(30) Priority: 01.06.2018 JP 2018106478
(43) Date of publication of application: 04.12.2019
(73) Proprietor: Daido Steel Co., Ltd., Nagoya-shi Aichi 461-8581 (JP)
(72) Inventor: KOYANAGI, Yoshihiko, Nagoya-shi, Aichi 457-8545 (JP); SUGINO, Atsushi, Nagoya-shi, Aichi 457-8545 (JP)
(74) Representative: Diehl & Partner

(56) References cited:
- WO-A1-2015/182454
- JP-A- 2015 193 910
- HARDING T S ET AL: "THE EFFECT OF IMPACT DAMAGE ON THE ROOM-TEMPERATURE FATIGUE BEHAVIOR OF GAMMA-TIAL", METALLURGICAL AND MATERIALS TRANSACTIONS A: PHYSICAL METALLURGY & MATERIALS SCIENCE, ASM INTERNATIONAL, MATERIALS PARK, OH, US, vol. 31A, no. 7, 1 July 2000 (2000-07-01), pages 1741-1752, XP001201639, ISSN: 1073-5623, DOI: 10.1007/S11661-998-0329-1

## Description

### FIELD OF THE INVENTION

The present invention relates to a preform and a method for producing a TiAl-based turbine wheel, and particularly relates to a preform for use in producing a TiAl-based turbine wheel having a relatively thin tip thickness of a turbine blade and having excellent mechanical properties and a method for producing a TiAl-based turbine wheel using such a preform.

### BACKGROUND OF THE INVENTION

Since turbine wheels for automobiles are complex in shape and rotate at a high speed at a high temperature, Ni-based cast alloys excellent in heat resistance are widely used. Meanwhile, in order to improve the performance of the turbine wheels, it is effective to reduce the weight of the material. Therefore, TiAl-based alloys excellent in heat resistance and having a density of about half that of the Ni-based cast alloys are used in some turbine wheels. TiAl-based alloy turbine wheels are often produced by a casting method in the same manner as that of the Ni-base cast alloys.

Various proposals have been made for such TiAl-based alloy turbine wheels and production methods therefor in the background art. For example, Patent Document 1 discloses a TiAl-based heat resistant member which is made of a TiAl-based alloy having a predetermined composition and has a hardened layer in whole surface or a part of the surface of the TiAl-based alloy, the hardened layer having a hardness higher than a hardness of an inside of the TiAl-based alloy.

Patent Document 1 discloses that:
(a) it is possible to increase the hardness only of the surface while keeping good internal mechanical properties by optimizing a molten metal component and a cooling rate in a solid-liquid zone; and
(b) since surface treatment is unnecessary, it is possible to increase the hardness only of the surface without causing an increase in the starting point of surface destruction or an increase in manufacturing cost.

Patent Document 2 discloses a method for producing a turbine wheel using a metal powder injection molding method and a cutting method.

Patent Document 2 discloses that by using the above methods, even a turbine wheel having a thin blade can be produced with high dimensional accuracy.

In addition to reduce the weight, the performance of the turbine wheel is improved by increasing the number of blades or thinning the blades. However, in the case of producing a turbine wheel complex in shape using the casting method, a relatively large thermal stress is generated during the cooling process after casting. Since the TiAl-based alloys are low in ductility, when the blade is too thin, there are problems that the thermal stress generated in the cooling process after casting cannot be relaxed, and the thin blade portion tends to break. Therefore, compared with the Ni-based cast alloys, the TiAl-based alloys have restrictions on castable shapes.

In order to solve the above problems, it is also considered to produce a turbine wheel from a large material by cutting. However, in this method, since the size of the material increases, the crystal grains are coarsened, and the mechanical properties of the turbine wheel deteriorate. In addition, in the case of producing a turbine wheel by a total cutting method, cutting cost (tool, efficiency) is very expensive.

In addition, a method of adding boron is effective for obtaining fine crystal grains with a large material. However, when boron is added, TiB₂ tends to be generated during casting, and TiB₂ may be a starting point of destruction. In addition, when the crystal grains are excessively micronized, high-temperature properties deteriorate and shrinkage tends to occur during casting.

Patent Document 1: JP-A-2015-193910
Patent Document 2: JP-A-2011-174096

### SUMMARY OF THE INVENTION

An object of the present invention is to provide a preform for use in producing a TiAl-based turbine wheel which has higher performance than that of a turbine wheel produced by a casting method and which is lower in cost than that of a turbine wheel produced by a total cutting method.

Another object of the present invention is to provide a method for producing a TiAl-based turbine wheel using such a preform.

Namely, the present invention relates to the following configurations.
(1) A preform for a TiAl-based turbine wheel, the preform including a TiAl-based alloy consisting of:
   28.0 mass% ≤ Al ≤ 35.0 mass%;
   1.0 mass% ≤ Nb+Mo+W+Ta ≤ 15.0 mass%;
   0.1 mass% ≤ Cr+Mn+V ≤ 5.0 mass%;
   0.1 mass% ≤ Si ≤ 1.0 mass%;
   C ≤ 0.2 mass%; and
   B ≤ 0.200 mass%,
   with a remainder being Ti and unavoidable impurities,
   in which the preform includes a plurality of turbine blade-corresponding portions, and
   each of the turbine blade-corresponding portions has a lamellar structure with an average lamellar colony diameter of 100 µm or more and 500 µm or less.
(2) The preform according to (1), in which the TiAl-based alloy includes at least one element selected from the group consisting of:
   0.01 mass% ≤ C ≤ 0.2 mass%; and
   0.005 mass% ≤ B ≤ 0.200 mass%.
(3) The preform according to (1) or (2), in which each of the turbine blade-corresponding portions has a tip thickness of 0.5 mm or more and 2.0 mm or less.
(4) A method for producing a TiAl-based turbine wheel, the method including:
   a first step of preparing the preform according to any one of (1) to (3); and
   a second step of removing a surface layer portion of the turbine blade-corresponding portion of the preform by processing to obtain a turbine blade having a lamellar structure with an average lamellar colony diameter of 100 µm or more and 500 µm or less.
(5) The method for producing a TiAl-based turbine wheel according to (4), in which the second step includes removing the surface layer portion of the turbine blade-corresponding portion by processing so that the turbine blade has a tip thickness of 0.3 mm or more and 1.0 mm or less, and a removal part is 0.05 mm or more and 1.5 mm or less.
(6) The method for producing a TiAl-based turbine wheel according to (4) or (5), in which the second step includes processing the surface layer portion of the turbine blade-corresponding portion so that the turbine blade has a surface roughness Ra of 1.6 µm or less.

In the case of producing a preform for a TiAl-based turbine wheel using the casting method, when components and shapes of respective portions are optimized, a preform having an appropriate average lamellar colony diameter and having less shrinkage at a blade portion can be obtained. When the obtained preform is processed, a turbine wheel in which the tip thickness of the blade portion is relatively small can be produced.

In the turbine wheel thus obtained, the structure of the blade portion is optimized and the tip thickness of the blade portion is relatively thin. Therefore, the turbine wheel has performance higher than that obtained by the casting method and is lower in cost than that obtained by a total cutting method.

### BRIEF DESCRIPTION OF THE DRAWINGS

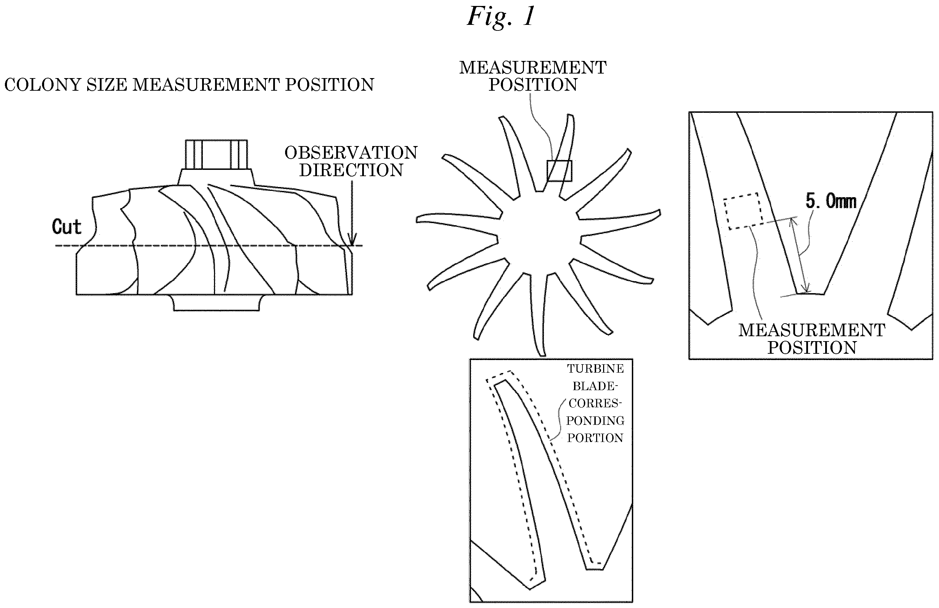

Fig. 1 is a schematic diagram for explaining a method of measuring a lamellar colony diameter (crystal grain diameter).

### DETAILED DESCRIPTION OF THE INVENTION

Hereinafter, the present invention is described in detail.

### [1. Preform]

The preform for a TiAl-based turbine wheel according to the present invention includes the following constituents.
(1) The preform includes a TiAl-based alloy consisting of:
   28.0 mass% ≤ Al ≤ 35.0 mass%;
   1.0 mass% ≤ Nb+Mo+W+Ta ≤ 15.0 mass%;
   0.1 mass% ≤ Cr+Mn+V ≤ 5.0 mass%;
   0.1 mass% ≤ Si ≤ 1.0 mass%;
   C ≤ 0.2 mass%; and
   B ≤ 0.200 mass%,
   with a remainder being Ti and unavoidable impurities.
(2) The preform includes a plurality of turbine blade-corresponding portions, and
each of the turbine blade-corresponding portions has a lamellar structure with an average lamellar colony diameter of 100 µm or more and 500 µm or less, wherein each of the turbine blade-corresponding portions has a tip thickness of 0.5mm or more and 2.0mm or less.

### [1.1. TiAl-based Alloy]

The preform according to the present invention comprises a TiAl-based alloy. The TiAl-based alloy contains the following elements, with a remainder being Ti and unavoidable impurities. The types of the elements to be added, the component ranges thereof and reasons for limitation are as follows. In the following description of the component ranges, the content of each component represents the average composition of the whole material.

### [1.1.1. Main Constituent Element]

### (1) 28.0 mass% ≤ Al ≤ 35.0 mass%:

Al is an essential element constituting intermetallic compounds γ(TiAl) and α₂(Ti₃Al) with Ti. In the case where the content of Al is too small, the amount of an α₂ phase generated is excessive. As a result, the ductility and toughness are lowered, and the oxidation resistance also deteriorates. Therefore, it is necessary that the content of Al is 28.0 mass% or more. The content of Al is preferably 30.0 mass% or more, and more preferably 31.0 mass% or more.

On the other hand, in the case where the content of Al is excessive, γ(TiAl) becomes a single phase, or the amount of an Al₃Ti phase generated is increased. As a result, the ductility and the toughness are lowered. In a γ/α₂ layered structure (lamellar structure), in order to obtain high strength and high toughness, the α₂(Al₃Ti) phase is required to be present in the alloy in an amount of 5 vol% to 30 vol%. Further, in the case where the content of Al is excessive, it is difficult to crystallize a β phase as a primary crystal and to grow the β phase during solidification. Therefore, it is necessary that the content of Al is 35.0 mass% or less. The content of Al is preferably 34.0 mass% or less, and more preferably 32.0 mass% or less.

### (2) 1.0 mass% ≤ Nb+Mo+W+Ta ≤ 15.0 mass%:

"Nb+Mo+W+Ta" represents the total amount of Nb, Mo, W, and Ta (hereinafter also referred to as "Nb and the like"). It also represents that any one of Nb and the like may be contained, or two or more of Nb and the like may be contained, as long as the total amount is limited to the above range (Nb ≥ 0 mass%, Mo ≥ 0 mass%, W ≥ 0 mass%, Ta ≥ 0 mass%).

Nb and the like are elements effective for improving the oxidation resistance of the TiAl-based alloy. The oxidation resistance in the case of adding Nb and the like together with Si is further improved as compared with the case of adding Nb and the like alone. In addition, since Nb and the like dissolve in Ti sites, they have the effect of increasing the hardness of the α₂ phase which increases the surface hardness. In order to obtain the above effect, it is necessary that the total amount of Nb and the like is 1.0 mass% or more. The total amount thereof is preferably 4.0 mass% or more, and more preferably 7.0 mass% or more.

On the other hand, in the case where the total amount of Nb and the like is excessive, a soft B2 phase is formed, making the effect of increasing the surface hardness saturated. In addition, since Nb and the like have high melting points and are expensive elements, adding more than necessary causes problems in productivity and material cost. Therefore, it is necessary that the total amount of Nb and the like is 15.0 mass% or less. The total amount thereof is preferably 10.0 mass% or less, and more preferably 8.0 mass% or less.

### (3) 0.1 mass% ≤ Cr+Mn+V ≤ 5.0 mass%:

"Cr+Mn+V" represents the total amount of Cr, Mn, and V (hereinafter also referred to as "Cr and the like"). It also represents that any one of Cr and the like may be contained, or two or more of Cr and the like may be contained, as long as the total amount is limited to the above range (Cr ≥ 0 mass%, Mn ≥ 0 mass%, V ≥ 0 mass%).

Cr and the like are elements dissolving in both the γ phase and the α₂ phase, particularly in the γ phase. In the case of dissolving Cr and the like in the γ phase, the hardness is increased through solid solution strengthening. In order to obtain the above effect, it is necessary that the total amount of Cr and the like is 0.1 mass% or more. The total amount thereof is preferably 0.5 mass% or more, and more preferably 0.8 mass% or more.

On the other hand, in the case where the total amount of the Cr and the like is excessive, the above effect is saturated. In addition, the influence on deterioration of oxidation resistance is increased. Therefore, it is necessary that the total amount of Cr and the like is 5.0 mass% or less. The total amount thereof is preferably 3.0 mass% or less, and more preferably 1.5 mass% or less.

### (4) 0.1 mass% ≤ Si ≤ 1.0 mass%:

Si is an element quite effective for improving the oxidation resistance of the TiAl-based material and improving the creep properties due to precipitation of a Ti-Si based compound. In addition, Si improves the high temperature stability of the lamellar structure obtained in the as-cast state. Further, since Si lowers the melting point of the molten metal, it is easy to control the structure during solidification. In order to obtain the above effect, it is necessary that the content of Si is 0.1 mass% or more. The content of Si is preferably 0.2 mass% or more, and more preferably 0.3 mass% or more.

On the other hand, in the case where the content of Si is excessive, an α phase tends to crystallize as a primary crystal. Therefore, it is necessary that the content of Si is 1.0 mass% or less. The content of Si is preferably 0.7 mass% or less, and more preferably 0.5 mass% or less.

### [1.1.2. Optional Constituent Element]

In addition to the above main constituent elements, the TiAl-based alloy may further contain one or two or more of the following optional constituent elements. The types of the elements to be added, the component ranges thereof and reasons for limitation are as follows. In the following description of the component ranges, the content of each component represents the average composition of the whole material.

### (5) 0.01 mass% ≤ C ≤ 0.2 mass%:

C dissolves in the γ phase and the α₂ phase, and has an effect of increasing the hardness by strengthening these phases. In order to obtain the above effect, the content of C is preferably 0.01 mass% or more. The content of C is more preferably 0.03 mass% or more, and still more preferably 0.06 mass% or more.

On the other hand, in the case where the content of C is excessive, the above effect is saturated and the ductility is lowered. Therefore, the content of C is preferably 0.2 mass% or less. The content of C is more preferably 0.15 mass% or less, and still more preferably 0.12 mass% or less.

### (6) 0.005 mass% ≤ B ≤ 0.200 mass%:

B has an effect of micronizing the crystal grains of the γ/α₂ layered structure and has an effect of increasing the hardness even on the surface. In addition, since B improves castability, it is easy to control the structure during solidification. In order to obtain the above effect, the content of B is preferably 0.005 mass% or more. The content of B is more preferably 0.01 mass% or more, and still more preferably 0.02 mass% or more.

On the other hand, in the case where the content of B is excessive, a large amount of TiB₂ which is a boride precipitates, and the strength and the toughness are lowered. Therefore, the content of B is preferably 0.200 mass% or less. The content of B is more preferably 0.150 mass% or less, and still more preferably 0.100 mass% or less.

### (7) O ≤ 0.3 mass%:

O dissolves in the γ phase and the α₂ phase, and has an effect of increasing the strength by strengthening these phases. However, in the case where the content of O is excessive, the ductility is lowered. Therefore, as an unavoidable impurity, O ≤ 0.3 mass% is preferable.

### (8) N ≤ 0.2 mass%:

N dissolves in the γ phase and the α₂ phase, and has an effect of increasing the strength by strengthening these phases. However, in the case where the content of N is excessive, the ductility is lowered. Therefore, as an unavoidable impurity, N ≤ 0.2 mass% is preferable.

### [1.2. Turbine Blade-corresponding Portion]

### [1.2.1. Definition]

"Turbine blade-corresponding portion" refers to a portion to be a turbine blade by processing. The preform includes a plurality of turbine blade-corresponding portions.

The shape and number of the turbine blade-corresponding portions are not particularly limited, and it is preferable to select the optimum one according to the purpose. However, it is preferable that the tip thickness of the turbine blade-corresponding portion satisfies the condition described later.

### [1.2.2. Average Lamellar Colony Diameter]

In the TiAl-based alloy according to the present invention, the β phase (βTi) precipitates as a primary crystal. As the cooling proceeds, the primary crystal β phase eventually becomes an α (αTi) phase having a relatively small content of Al. As the cooling further proceeds, the α phase transforms into the γ(TiAl) phase, and then the α₂(Ti₃Al) phase precipitates in a lamellar form in the γ phase. As a result, a plurality of lamellar colonies are formed.

"Lamellar colony" refers to a region where directions of lamellae are aligned. Lamellar colonies are distinguished from one another with boundaries therebetween in the observation of metallographic structure, since the directions of the lamellae in one lamellar colony is different from those in another lamellar colony.

"Average lamellar colony diameter" represents the average value of the sizes of such lamellar colonies and has the same meaning as "average crystal grain diameter". In the present invention, "average lamellar colony diameter of turbine blade-corresponding portion" refers to a value measured by the following procedures (see Fig. 1):
(a) cutting the preform near the center in the axial direction;
(b) observing ten visual fields in a blade central portion at a position 5 mm ± 0.5 mm from a blade root in the cross section of an upper portion of a leading edge of the turbine blade-corresponding portion using an optical microscope with a magnification of 100 times; and
(c) measuring the sizes of the lamellar colonies by a line segment method and obtaining the average value thereof.

The lamellar colony diameter influences the mechanical properties of the TiAl-based alloy. In the case where the lamellar colony diameter is too small, the creep properties deteriorate, so that the blade portion undergoes creep deformation during high speed rotation. Therefore, the average lamellar colony diameter is 100 µm or more. The average lamellar colony diameter is preferably 120 µm or more, and more preferably 150 µm or more.

On the other hand, in the case where the lamellar colony diameter is too large, the ductility is lowered, so that low cycle fatigue properties and impact properties deteriorate. Therefore, the average lamellar colony diameter is 500 µm or less. The average lamellar colony diameter is preferably 400 µm or less, and more preferably 300 µm or less.

### [1.2.3. Tip Thickness]

The turbine blade is generally shaped such that the blade root thickness is large and the thickness gradually decreases toward the blade tip. Since the turbine blade-corresponding portion before processing is a turbine blade to which a removal part is added, the thickness of the turbine blade-corresponding portion also becomes the thinnest at the blade tip.

The TiAl-based alloy which is the material of the preform has poor ductility. Therefore, in the case of producing the preform using a casting method, when the tip thickness of the turbine blade-corresponding portion is too small, cracks tend to occur at the tip portion of the turbine blade-corresponding portion due to the thermal stress generated during the cooling process after casting. Therefore, the tip thickness of the turbine blade-corresponding portion is 0.5 mm or more. The tip thickness is more preferably 0.70 mm or more, and still more preferably 0.90 mm or more.

On the other hand, when the tip thickness is too large, the removal part during the processing is excessively thick, and the processing cost increases. Therefore, the tip thickness of the turbine blade-corresponding portion is 2.0 mm or less. The tip thickness is more preferably 1.5 mm or less, and still more preferably 1.2 mm or less.

### [2. Method for Producing TiAl-based Turbine Wheel]

The method for producing the TiAl-based turbine wheel according to the present invention includes:
a first step of preparing the preform according to the present invention; and
a second step of removing a surface layer portion of the turbine blade-corresponding portion of the preform by processing to obtain a turbine blade having a lamellar structure with an average lamellar colony diameter of 100 µm or more and 500 µm or less.

### [2.1. First Step]

First, the preform according to the present invention is prepared (first step). The method for producing the preform is not particularly limited as long as it is a method capable of producing a preform having the above conditions. In order to reduce the cost, the preform is preferably produced by a casting method. Details of the preform are as described above, so the explanation is omitted.

In the case of using a casting method, the preform can be produced by:
(a) blending raw materials so as to have a predetermined composition; and
(b) casting a molten metal in a mold.

The method of dissolving the raw materials is not particularly limited, and any method may be used as long as a uniform molten metal can be obtained. Examples of the dissolution method include a levitation dissolution method, a vacuum induction dissolution method, and a plasma/skull dissolution method.

The obtained preform may be used as it is for the next step or may be subjected to HIP treatment before being subjected to the next step. The HIP treatment is not always necessary. In the case of performing the HIP treatment, internal casting defects disappear and the reliability is improved. The conditions of the HIP treatment are not particularly limited, and optimum conditions can be selected according to the purpose.

### [2.2. Second Step]

Next, a turbine blade having a lamellar structure with an average lamellar colony diameter of 100 µm or more and 500 µm or less is obtained by removing surface layer portions of the turbine blade-corresponding portions of the preform by processing (second step).

### [2.2.1. Processing Method]

The turbine blade is formed by removing the surface layer portions of the turbine blade-corresponding portions of the preform by processing. In the present invention, the processing method for obtaining the turbine blade is not particularly limited. Examples of the processing method include machine cutting, chemical cutting, and polishing.

### [2.2.2. Removal Part]

The removal part for processing is not particularly limited, and the optimum value can be selected according to the purpose. The second step includes removing the surface layer portion of the turbine blade-corresponding portion by processing, so that particularly:
the turbine blade has the tip thickness of 0.3 mm or more and 1.0 mm or less; and
the removal part is 0.05 mm or more and 1.5 mm or less.

In the case where the thickness of the turbine blade after processing is too small, the mechanical properties of the turbine blade deteriorate. Therefore, the tip thickness of the turbine blade is preferably 0.3 mm or more. The tip thickness is preferably 0.35 mm or more, and more preferably 0.40 mm or more.

On the other hand, in the case where the thickness of the turbine blade is too large, the weight of the turbine wheel increases and the performance of the turbine wheel deteriorates. Therefore, the tip thickness of the turbine blade is preferably 1.0 mm or less. The tip thickness is preferably 0.80 mm or less, and more preferably 0.60 mm or less.

In the case where the removal part has a certain thickness, the shape accuracy of the final product can be ensured by adjusting the thickness of the removal part, even when production variation occurs in the thicknesses of the turbine blade-corresponding portions before processing (particularly, in the case where the turbine blade-corresponding portions are thin). However, in the case where the removal part is too thin, the thickness of the removal part cannot be adjusted, making it impossible to ensure the shape accuracy when the production variation described above occurs. Therefore, the removal part is preferably 0.05 mm or more. The removal part is more preferably 0.08 mm or more, and still more preferably 0.10 mm or more.

On the other hand, in the case where the removal part is too thick, the processing cost increases. Therefore, the removal part is preferably 1.5 mm or less. The removal part is more preferably 1.0 mm or less, and still more preferably 0.5 mm or less.

### [2.2.3. Surface Roughness]

The surface roughness of the turbine blade after processing influences the mechanical properties of the turbine blade. Generally, the larger the surface roughness of the turbine blade, the lower the fatigue properties. In order to obtain a turbine wheel excellent in fatigue properties, it is preferable that the second step includes processing the surface layer portion of the turbine blade-corresponding portion, so that the turbine blade has the surface roughness Ra of 1.6 µm or less. The surface roughness Ra of the turbine blade is more preferably 1.2 µm or less, and still more preferably 1.0 µm or less.

Here, "surface roughness Ra" refers to the arithmetic mean roughness (µm) defined in JIS B0601 (1994).

### [2.2.4. Average Lamellar Colony Diameter]

"Average lamellar colony diameter of turbine blade" refers to a value measured by the following procedures (see Fig. 1):
(a) cutting the turbine wheel near the center in the axial direction;
(b) observing ten visual fields in a blade central portion at a position 5 mm ± 0.5 mm from a blade root in the cross section of an upper portion of a leading edge of the turbine blade using an optical microscope with a magnification of 100 times; and
(c) measuring the sizes of the lamellar colonies by a line segment method and obtaining the average value thereof.

The average lamellar colony diameter of the turbine blade is 100 µm or more and 500 µm or less. The average lamellar colony diameter of the turbine blade is same as the average lamellar colony diameter of the turbine blade-corresponding portion. Other points concerning the average lamellar colony diameter of the turbine blade are the same as the average lamellar colony diameter of the turbine blade-corresponding portion, so the explanation is omitted.

### [3. Effect]

The turbine wheel including the TiAl-based alloy has high performance due to the light weight thereof, but on the other hand, due to the low ductility thereof, the TiAl-based alloy has poor productivity as compared with the Ni-based alloy which is a material for general-purpose turbine wheels. Therefore, in the case of producing the turbine wheel using the TiAl-based alloy, since the shape of the turbine blade is restricted, the properties have not been able to be fully exhibited.

In order to solve this problem, a method of producing an ingot larger than the outer diameter of a turbine wheel and producing a turbine wheel having an arbitrary shape from the ingot by processing such as cutting is conceivable. However, for the TiAl-based alloy, the solidification rate during casting has a large influence on the structure, and in the case where the structure is coarse, the ductility is lowered. In the case where the ductility is lowered, the turbine blade tends to be broken during use. In addition, the cutting cost is very high in the total cutting method.

In contrast, in the case of producing a preform for a TiAl-based turbine wheel using the casting method, when components and shapes of respective portions are optimized, a preform having an appropriate average lamellar colony diameter and having less shrinkage at a blade portion can be obtained. When the obtained preform is processed, a turbine wheel in which the tip thickness of the blade portion is relatively small can be produced.

In the turbine wheel thus obtained, the structure of the blade portion is optimized and the tip thickness of the blade portion is relatively small. Therefore, the turbine wheel has performance higher than that obtained by the casting method and is lower in cost than that obtained by a total cutting method.

### Examples

### (Examples 1 to 10 and Comparative Examples 1 to 5)

### [1. Preparation of Sample]

### [1.1. Examples 1 to 10]

Pure Ti, granular Al, and pure metals or alloys of other metal elements were used as raw materials. Raw materials were blended so as to be a composition of Ti-31.8A1-7.5Nb-1.0Cr-0.5Si-0.03C (mass%) and melted in a water-cooled copper crucible, and 58 mm-outer-diameter turbine wheels with various blade tip thicknesses were cast. The blade portion of the turbine wheel in the as-cast condition was cut by machining after being removed from a mold to obtain a target blade tip thickness.

### [1.2. Comparative Examples 1 to 5]

Turbine wheels were produced in the same manner as in Example 1 except that the tip thickness of the turbine blade-corresponding portion was varied (Comparative Examples 1 to 3).

An ingot having an outer diameter larger than an outer diameter of a turbine wheel was produced, and a turbine wheel was produced from the ingot by cutting (Comparative Example 4).

Further, the as-cast preform was subjected to the test as it was (Comparative Example 5).

### [2. Test Method]

### [2.1. Average Lamellar Colony Diameter]

Fig. 1 shows a schematic diagram for explaining a method of measuring a lamellar colony diameter (crystal grain diameter). The preform or turbine wheel was cut near the center thereof. Ten visual fields in the blade central portion at a position 5 mm from the blade root were observed using an optical microscope with a magnification of 100 times. The average lamellar colony diameter was measured using a line segment method based on the obtained microscopic structures.

### [2.2. Surface Roughness]

The arithmetic mean roughness (Ra) of the blade surface after processing was measured according to JIS B0601 (1994) using a stylus method.

### [2.3. Creep Properties and Low Cycle Fatigue Properties]

The obtained turbine wheel or preform was incorporated into a turbocharger, and the durability test of the turbine wheel was performed. In order to evaluate the creep properties of the blade portion by the durability test, the rupture time was evaluated by rotating the turbine wheel or preform at 950°C and 200,000 rpm.

In addition, in order to evaluate the low cycle fatigue properties of a product including the blade portion, the turbine wheel or preform was rotated from a stopped state with rapid acceleration to 200,000 rpm, and when the rotation speed reached 200,000 rpm, the exhaust gas was shut down and reacceleration was performed at a rotation speed below 20,000 rpm. The acceleration/deceleration test was repeated with 200,000 rpm ⇔ 20,000 rpm as one cycle, and the number of cycles at rupture was evaluated.

### [3. Result]

The results are shown in Table 1. From Table 1, the followings can be seen.
(1) Examples 1 to 10 were all excellent in creep properties and low cycle fatigue properties.
(2) In Comparative Example 1, the blade portion was broken due to the thermal stress during casting since the tip thickness of the turbine blade-corresponding portion was too thin. Therefore, the turbine wheel could not be produced.
(3) In Comparative Example 2, the turbine wheel could be produced.
   However, the average lamellar colony diameter of the blade portions was less than 100 µm since the tip thickness of the turbine blade-corresponding portion was thin. As a result, Comparative Example 2 was low in creep properties and low cycle fatigue properties.
(4) In Comparative Example 3, the average lamellar colony diameter of the blade portions was large since the tip thickness of the turbine blade-corresponding portion was thick. Therefore, the creep properties were good, but the low cycle fatigue properties were low.
(5) In Comparative Example 4, an ingot having a diameter of 80 mm was produced and the turbine wheel was produced by only cutting the ingot. Due to adoption of the total cutting method, thin blade products were obtained. However, low cycle fatigue properties were poor since the initial lamellar colony diameter was large.
(6) Comparative Example 5 has an average lamellar colony diameter and blade tip thickness comparable to those of Examples 1 to 2. However, the low cycle fatigue properties were inferior to Examples 1 and 2 which performed cutting, since the surface roughness was large.
(7) A turbine wheel excellent in creep properties and low cycle fatigue properties can be produced by preparing a turbine wheel preform with a certain range of lamellar colony diameter of the blade portion and finishing the turbine wheel preform into a turbine wheel shape by cutting.
(8) A thinner blade thickness is desirable for performance since the smaller the blade thickness, the better the response and performance of the turbine wheel. The method according to the present invention can be said to be a method for producing a high performance turbine wheel, since thin blade articles which are difficult to be produced by casting can also be produced.

**Table 1**

| | Preform | | Product | | | | Mechanical properties of product | |
|---|---|---|---|---|---|---|---|---|
| | Turbine blade-corresponding portion | Lamellar colony diameter | Turbine blade | Removal part | Surface roughness | Note | Creep properties | Low cycle fatigue properties |
| | Tip thickness | Internal | Tip thickness | Thickness | | | Rupture time [h] at 950°C and 200,000 rpm | Rupture cycle [cycle] of 200,000 rpm ⇔ 20,000 rpm |
| | mm | µm | mm | mm | µm | | A: > 10 B: 5 to 10 C: < 5 | A: > 100 B: 50 to 100 C: < 50 |
| Example 1 | 0.50 | 137 | 0.30 | 0.10 | 0.6 | Double side cutting | A | A |
| Example 2 | 0.50 | 137 | 0.40 | 0.05 | 0.7 | Double side cutting | A | A |
| Example 3 | 0.80 | 168 | 0.50 | 0.15 | 0.6 | Double side cutting | A | A |
| Example 4 | 1.00 | 201 | 0.50 | 0.25 | 0.8 | Double side cutting | A | A |
| Example 5 | 1.20 | 222 | 0.50 | 0.35 | 1.1 | Double side cutting | A | A |
| Example 6 | 1.60 | 247 | 0.50 | 0.55 | 0.7 | Double side cutting | A | A |
| Example 7 | 1.60 | 247 | 0.80 | 0.40 | 1.2 | Double side cutting | A | A |
| Example 8 | 2.00 | 412 | 0.50 | 0.75 | 0.6 | Double side cutting | A | A |
| Example 9 | 2.00 | 412 | 1.00 | 0.50 | 0.5 | Double side cutting | A | A |
| Example 10 | 2.00 | 412 | 1.00 | 1.00 | 0.7 | One side cutting | A | A |
| Comparative Example 1 | 0.30 | 69 | - | - | - | Could not be produced | - | - |
| Comparative Example 2 | 0.40 | 88 | 0.30 | 0.05 | 0.6 | Double side cutting | C | C |
| Comparative Example 3 | 2.50 | 624 | 0.50 | 1.00 | 0.7 | Double side cutting | A | C |
| Comparative Example 4 | - | 1822 | 0.30 | - | 0.6 | Cutting from ingot | A | C |
| Comparative Example 5 | 0.50 | 142 | 0.50 | - | 3.4 | No cutting | A | B |

As described above, although the embodiment of the present invention is described in detail, the present invention is not limited at all to the embodiment, and various modifications are possible without departing from the scope of the present invention as defined by the claims.

### INDUSTRIAL APPLICABILITY

The preform according to the present invention can be used for, for example, a turbine wheel of an automotive turbocharger.

## Claims

1. A preform for a TiAl-based turbine wheel, the preform comprising a TiAl-based alloy consisting of:
28.0 mass% ≤ Al ≤ 35.0 mass%;
1.0 mass% ≤ Nb+Mo+W+Ta ≤ 15.0 mass%;
0.1 mass% ≤ Cr+Mn+V ≤ 5.0 mass%;
0.1 mass% ≤ Si ≤ 1.0 mass%;
C ≤ 0.2 mass%; and
B ≤ 0.200 mass%,
with a remainder being Ti and unavoidable impurities,
wherein the preform includes a plurality of turbine blade-corresponding portions, and
each of the turbine blade-corresponding portions has a lamellar structure with an average lamellar colony diameter of 100 µm or more and 500 µm or less,
wherein each of the turbine blade-corresponding portions has a tip thickness of 0.5 mm or more and 2.0 mm or less.

2. The preform according to claim 1, wherein the TiAl-based alloy comprises at least one element selected from the group consisting of:
0.01 mass% ≤ C ≤ 0.2 mass%; and
0.005 mass% ≤ B ≤ 0.200 mass%.

3. A method for producing a TiAl-based turbine wheel, the method comprising:
a first step of preparing the preform according to any one of claims 1 and 2; and
a second step of removing a surface layer portion of the turbine blade-corresponding portion of the preform by processing to obtain a turbine blade having a lamellar structure with an average lamellar colony diameter of 100 µm or more and 500 µm or less, wherein the second step includes removing the surface layer portion of the turbine blade-corresponding portion by processing so that the turbine blade has a tip thickness of 0.3 mm or more and 1.0 mm or less, and a removal part is 0.05 mm or more and 1.5 mm or less.

4. The method according to claim 3, wherein the second step includes processing the surface layer portion of the turbine blade-corresponding portion so that the turbine blade has a surface roughness Ra of 1.6 µm or less.

## Patentansprüche

1. Vorform für ein TiAl-basiertes Turbinenrad, wobei die Vorform eine TiAl-basierte Legierung beinhaltet, die besteht aus:
28,0 Masse% ≤ Al ≤ 35,0 Masse%;
1,0 Masse% ≤ Nb+Mo+W+Ta ≤ 15,0 Masse%;
0,1 Masse% ≤ Cr+Mn+V ≤ 5,0 Masse%;
0,1 Masse% ≤ Si ≤ 1,0 Masse%;
C ≤ 0,2 Masse%; und
B ≤ 0,200 Masse%,
mit dem Rest Ti und unvermeidliche Verunreinigungen,
wobei die Vorform mehrere Tubinenschaufel-entsprechende Abschnitte beinhaltet, und
jeder der Turbinenschaufel-entsprechenden Abschnitte eine lamellare Struktur mit einem durchschnittlichen lamellarem Koloniedurchmesser von 100 µm oder mehr und 500 µm oder weniger aufweist, wobei jeder der Turbinenschaufel-entsprechenden Abschnitte eine Spitzendicke von 0,5 mm oder mehr und 2,0 mm oder weniger aufweist.

2. Vorform gemäß Anspruch 1, wobei die TiAl-basierte Legierung wenigstens ein Element ausgewählt aus der Gruppe beinhaltet, die besteht aus:
0,01 Masse% ≤ C ≤ 0,2 Masse%; und
0,005 Masse% ≤ B ≤ 0,200 Masse%.

3. Verfahren zum Herstellen eines TiAl-basierten Turbinenrads, wobei das Verfahren beinhaltet:
einen ersten Schritt der Herstellens der Vorform gemäß einem der Ansprüche 1 und 2; und
einen zweiten Schritt des Entfernens eines Oberflächenschichtabschnitts des Turbinenschaufel-entsprechenden Abschnitts der Vorform durch Bearbeiten zum Erhalten einer Turbinenschaufel mit einer lamellaren Struktur mit einem durchschnittlichen lamellaren Koloniedurchmesser von 100 µm oder mehr und 500 µm oder weniger, wobei der zweite Schritt das Entfernen des Oberflächenschichtabschnitts des Turbinenschaufel-entsprechenden Abschnitts durch Bearbeiten derart beinhaltet, dass die Turbinenschaufel eine Spitzendicke von 0,3 mm oder mehr und 1,0 mm oder weniger, und der entfernte Teil 0,05 mm oder mehr und 1,5 mm oder weniger ist.

4. Verfahren gemäß Anspruch 3, wobei der zweite Schritt das Bearbeiten des Oberflächenschichtabschnitts des Turbinenschaufel-entsprechenden Abschnitts derart beinhaltet, dass die Turbinenschaufel eine Oberflächen-Rauigkeit Ra von 1,6 µm oder weniger aufweist.

## Revendications

1. Préforme pour une roue de turbine à base de TiAl, la préforme comprenant un alliage à base de TiAl consistant en :
28,0 % en masse ≤ Al ≤ 35,0 % en masse ;
1,0 % en masse ≤ Nb + Mo + W + Ta ≤ 15,0 % en masse ;
0,1 % en masse ≤ Cr + Mn + V ≤ 5,0 % en masse ;
0,1 % en masse ≤ Si ≤ 1,0 % en masse ;
C ≤ 0,2 % en masse ; et
B ≤ 0,200 % en masse,
le reste étant du Ti et des impuretés inévitables,
dans laquelle la préforme comprend une pluralité de parties correspondant à une aube de turbine, et
dans laquelle chacune des parties correspondant à une aube de turbine a une structure lamellaire avec un diamètre moyen de colonie lamellaire de 100 µm ou plus et de 500 µm ou moins,
dans laquelle chacune des parties correspondant à une aube de turbine a une épaisseur de pointe de 0,5 mm ou plus et de 2,0 mm ou moins.

2. Préforme selon la revendication 1, dans laquelle l'alliage à base de TiAl comprend au moins un élément choisi dans le groupe constitué par :
0,01 % en masse ≤ C ≤ 0,2 % en masse ; et
0,005 % en masse ≤ B ≤ 0,200 % en masse.

3. Procédé pour produire une roue de turbine à base de TiAl, le procédé comprenant :
une première étape de préparation de la préforme selon l'une quelconque des revendications 1 et 2 ; et
une deuxième étape d'élimination d'une partie de couche de surface de la partie correspondant à une aube de turbine de la préforme par un traitement pour obtenir une aube de turbine ayant une structure lamellaire avec un diamètre moyen de colonie lamellaire de 100 µm ou plus et de 500 µm ou moins, dans lequel la deuxième étape comprend l'élimination de la partie de couche de surface de la partie correspondant à une aube de turbine par un traitement de façon que l'aube de turbine ait une épaisseur de pointe de 0,3 mm ou plus et de 1,0 mm ou moins, et que la partie éliminée soit de 0,05 mm ou plus et de 1,5 mm ou moins.

4. Procédé selon la revendication 3, dans lequel la deuxième étape comprend le traitement de la partie de couche de surface de la partie correspondant à une aube de turbine de façon que l'aube de turbine ait une rugosité de surface Ra de 1,6 µm ou moins.
